(19) Europäisches Patentamt
European Patent Office
Office européen des brevets

(11) **EP 3 456 453 B1**

(12) **EUROPÄISCHE PATENTSCHRIFT**

(45) Veröffentlichungstag und Bekanntmachung des Hinweises auf die Patenterteilung:
**19.03.2025 Patentblatt 2025/12**

(21) Anmeldenummer: **18192656.9**

(22) Anmeldetag: **05.09.2018**

(51) Internationale Patentklassifikation (IPC):
**B23F 5/16** (2006.01)    **B23F 23/00** (2006.01)
**G05B 19/18** (2006.01)    **G05B 19/404** (2006.01)
**B23Q 17/24** (2006.01)    **B23F 23/12** (2006.01)
**B23Q 17/09** (2006.01)

(52) Gemeinsame Patentklassifikation (CPC):
**B23F 5/163; B23F 23/006; B23F 23/1218;**
**B23Q 17/0914; G05B 19/186; G05B 19/404;**
G05B 2219/36198; G05B 2219/45214

(54) **VERFAHREN UND VORRICHTUNG ZUM WÄLZSCHÄLEN**

METHOD AND DEVICE FOR SKIVING

PROCÉDÉ ET DISPOSITIF DE TAILLAGE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **08.09.2017 DE 102017120788**

(43) Veröffentlichungstag der Anmeldung:
**20.03.2019 Patentblatt 2019/12**

(73) Patentinhaber: **Liebherr-Verzahntechnik GmbH
87437 Kempten (DE)**

(72) Erfinder: **Würfel, Robert
87499 Wildpoldsried (DE)**

(74) Vertreter: **Laufhütte, Dieter
Lorenz Seidler Gossel
Rechtsanwälte Patentanwälte
Partnerschaft mbB
Widenmayerstraße 23
80538 München (DE)**

(56) Entgegenhaltungen:
DD-A1- 222 521          DE-A1- 102014 007 646
DE-A1- 102014 018 328   DE-A1- 102015 104 310
US-A1- 2015 081 083     US-A1- 2017 235 283

• PED' S E ET AL: "Development of a Model Series of Hardware-Software Complexes for Automated Measurements of the Parameters of Gear-Cutting Tools", MEASUREMENT TECHNIQUES, CONSULTANTS BUREAU. NEW YORK, US, vol. 56, no. 12, 29 March 2014 (2014-03-29), pages 1370 - 1376, XP035367433, ISSN: 0543-1972, [retrieved on 20140329], DOI: 10.1007/ S11018-014-0384-5

# EP 3 456 453 B1

**Beschreibung**

Die vorliegende Erfindung betrifft ein Verfahren und eine Vorrichtung zum Wälzschälen. Eine solche Vorrichtung ist typischerweise eine Bearbeitungsmaschine wie eine Schälmaschine oder dergleichen, die dazu geeignet ist, Verzahnungen oder andere am Umfang eines Bauteils sich periodisch wiederholende Strukturen mit hoher Qualität zu erzeugen. Ein derartiges Verfahren gemäß dem Oberbegriff des Anspruchs 1 und eine derartige Vorrichtung gemäß dem Oberbegriff des Anspruchs 8 sind aus dem Dokument DE 10 2015 104310 A1 bekannt.

Beim Wälzschälen ist das zu bearbeitende Werkstück auf einer Werkstückspindel und das Schälrad (Werkzeug), das während des Schälens spanabtragend mit dem Werkstück zusammenwirkt, auf einer Werkzeugspindel angeordnet. Die beiden Spindeln werden beim Wälzschälen entsprechend einem Kopplungsverhältnis angetrieben, so dass die Schneidzähne des Schälrads spanabhebend die Zahnflanke des Werkstücks bearbeiten.

Für die bei der Verzahnung notwendige hohe Qualität ist es erforderlich, die Geometrie des Schälrads und die Lage des Schälrads in der Bearbeitungsmaschine möglichst genau zu kennen.

Dabei ist es in Bearbeitungsmaschinen nach dem Stand der Technik so, dass Schälräder auf Messmaschinen außerhalb der Maschine vermessen werden. Dies bringt unter anderem folgende Nachteile mit sich:

a) es müssen geeignete Vorrichtungen zur Verfügung stehen,
b) durch die Vermessung entsteht ein zusätzlicher Arbeitsaufwand, da ein Bediener das Schälrad auf die Vorrichtung bringen muss um sie dort zu vermessen, und
c) in Bezug auf die Lage des Schälrads in der Bearbeitungsmaschine spielen neben der Geometrie des Schälrades selbst auch die Werkzeugaufnahme und der Werkzeughalter eine Rolle. Diese Einflüsse können bei einer externen Messung nicht erfasst werden.

Eine Möglichkeit Abweichungen in der Geometrie des Schälrads und/oder der Lage des Schälrads in der Maschine indirekt zu erkennen, ist ein Werkstück zu Schälen, es zu vermessen (in der Bearbeitungsmaschine oder außerhalb auf einer separaten Messeinheit), die Abweichungen zu bestimmen und für folgende Werkstücke und/oder Bearbeitungshübe die Bearbeitungskinematik so anzupassen, dass die Abweichungen zumindest teilweise kompensiert werden.

Nachteilhaft hieran ist, dass ein solches Verfahren zu Ausschussteilen führt, insbesondere dann, wenn die Werkstücke in nur einem Schnitt pro Flanke geschält werden, da es in diesem Fall nicht die Möglichkeit gibt, vor dem letzten Schnitt Abweichungen zu messen und auszukorrigieren. Ein Anwendungsfall für nur einen Schnitt pro Flanke ist insbesondere der Einsatz von Wälzschälen als Hart-Feinbearbeitungsverfahren (Hartschälen). Gerade in diesem Fall sind die Werkstücke bereits weit bearbeitet und teuer, so dass es einen Ausschuss zu vermeiden gilt.

Es ist demnach das Ziel der vorliegenden Erfindung eine Vorrichtung zum Wälzschälen vorzusehen, die die oben aufgeführten Nachteile überwindet. Dies gelingt mit einem Verfahren, das sämtliche Schritte des Anspruchs 1 umfasst. Weiter wird das Ziel der vorliegenden Erfindung durch eine Vorrichtung mit den Merkmalen des Anspruchs 9 erreicht. Vorteilhafte Ausgestaltungen der Erfindung sind in den abhängigen Ansprüchen aufgeführt.

Die Bearbeitungskinematik beim Wälzschälen wird nachfolgend näher beschrieben:

1) Das Kopplungsverhältnis zwischen Werkzeug- und Werkstückspindelachse ist durch das Zähnezahlverhältnis von Werkzeug und Werkstück gegeben und beschreibt das Verhältnis von Werkzeug- und Werkstückspindel Drehzahl während der Bearbeitung, jedoch noch ohne Berücksichtigung des Axialverschubs entlang des Werkstücks.
2) Der Differentialvorschub beschreibt die durch den Axialvorschub entlang des Werkstücks durch die Steigungshöhe des Werkstücks bestimmte Zusatzdrehung des Werkstücks. Diese Zusatzdrehung ist nötig um den Schrägungswinkel am Werkstück zu erzeugen.
3) Die Koppelposition beschreibt einen Satz an Werten für die Drehposition der Werkzeugspindel, für die Drehposition der Werkstückspindel und die Position in axialer Richtung.
4) Der Achsabstand bezeichnet den Abstand zwischen Werkzeug- und Werkstückspindelachse.
5) Der Achskreuzwinkel wird hier als der Winkel definiert, um den die Werkzeugspindel gegenüber der Werkstückspindel geneigt ist.
6) Der Spanflächenversatz bezeichnet eine Verschiebung des Werkzeugs entlang der Werkzeugspindelachse.

Die beim Wälzschälen am Werkstück erzeugte Lückengeometrie hängt von der Form der Schneidkante, der Lage der Schneidkante und der Bearbeitungskinematik ab. Die Schneidkante entsteht dadurch, dass am verzahnten Schälrad eine Spanebene eingeschliffen wird. Diese Spanfläche kann beispielsweise als Treppenschliff oder Kegelmantelschliff ausgeführt sein. Die für die erzielte Lückengeometrie relevante Schneidkante ergibt sich rechnerisch durch Schneiden der Flanken eines Schälradzahns mit der Spanfläche an diesem Zahn. Dieser Schnitt liefert eine Kurve im Raum. Diese Kurve, betrachtet in einem Koordinatensystem, welches fest mit dem Schälrad verknüpft ist, in dem beispielsweise die z-Achse mit der Drehachse des Schälrads und somit während der Bearbeitung mit der Werkzeugspindelachse zusammenfällt, wird im Sinne dieser Erfindung als räumlicher Verlauf der Schneidkante bezeichnet. Wird die Schneidkante um die Drehachse gedreht und/oder entlang der Drehachse verschoben, so ändert sich im Sinne dieser Erfindung der räumliche Verlauf der Schneidkante nicht, es ändert sich lediglich die Lage der Schneidkante. Die Lage der Schneidkante bestimmt somit die Position der Schneidkante in axialer Richtung sowie ihre Winkellage, beide bezogen auf die Drehachse.

Gemäß dem erfindungsgemäßen Verfahren gemäß dem Anspruch 1 zum Wälzschälen eines Werkstücks wird in einem ersten Schritt die Geometrie eines Werkzeugs zum Bearbeiten des Werkstücks in einem in einer Vorrichtung zur Wälzschälbearbeitung eingespannten Zustand vermessen. Dabei kann das Werkzeug ein Schälrad sein. In einem nachgelagerten weiteren Schritt wird eine Bearbeitungskinematik zum Wälzschälen in Abhängigkeit von der vermessenen Geometrie des Werkzeugs bestimmt. Das Verfahren zeichnet sich dadurch aus, dass in dem ersten Schritt die absolute Lage einer Schneidkante des Werkzeugs in der Vorrichtung bestimmt wird.

Da in dem ersten Schritt auch die absolute Lage einer Schneidkante des Werkzeugs in der Vorrichtung bestimmt wird, wird die Bearbeitungskinematik auf die absolute Lage der Schneidkante abgestimmt.

So können Fehler bei einem vorausgehenden Vermessen eines Schälrads oder Ungenauigkeiten in der Werkzeugaufnahme bzw. dem Werkzeughalter beim Wälzschälen kompensiert werden.

Die Lage wird als absolut bezeichnet, wenn sie auf die Position in der Werkzeugaufnahme in der Vorrichtung bezogen ist. Die axiale Position wird dabei auf die Anlagefläche der Werkzeugaufnahme bezogen. Die Drehposition kann dabei auf eine definierte Richtung in der Vorrichtung bezogen sein.

Nach dem Verfahren wird in dem ersten Schritt neben dem Bestimmen der Lage zusätzlich der räumliche Verlauf der Schneidkante bestimmt. Dadurch ist eine noch bessere Bearbeitungskinematik erzeugbar.

Nach einer bevorzugten Ausführung der Erfindung ist das Werkzeug ein Schälrad und die Geometrie des Schälrads ist, wobei eine oder mehrere der folgenden geometrischen Größen am Schälrad gemessen werden:

a) einen Außendurchmesser des Schälrads an einer oder mehreren axialen Positionen des Schälrads,
b) eine Zahndicke des Schälrads an einer oder mehreren axialen Positionen des Schälrads,
c) eine Profillinie des Schälrads,
d) eine Flankenlinie des Schälrads,
e) einen Verlauf der Schneidkante des Schälrads,
f) eine Lage der Spanfläche und/oder deren Orientierung, insbesondere Span- und Treppenwinkel, und/oder
g) die Lage des Werkzeugs, vorzugsweise eine Drehposition des Schälrads, bevorzugterweise die Drehposition einer oder mehrere Zähne auf dem Schälrad.

Die Vermessung dieser Größen kann dazu genutzt werden, um die absolute Lage und/oder den räumlichen Verlauf der Schneidkante zu bestimmen.

Diese Bestimmung kann beispielsweise auf folgende Weisen erfolgen:

- direkte Vermessung der Schneidkante, wobei bevorzugt die Vermessung entlang der Schneidkante erfolgt,
- durch Vermessen der Spanfläche zur Bestimmung der Lage und Orientierung sowie durch rechnerisches Schneiden dieser mit dem Profil des Schälradzahns, wobei das Profil des Schälradzahns durch eine Profillinien- und/oder Zahndickenmessung bestimmt werden kann oder wobei mit dem theoretischen Profil gemäß Werkzeugauslegung gerechnet wird.

Vorzugsweise wird die Bearbeitungskinematik in Abhängigkeit von der gemessenen Geometrie des Werkzeuges und von einer Axialvorschubposition des Werkstücks bestimmt und/oder korrigiert.

Beim Wälzschälen ist es möglich, durch eine von der Axialvorschubposition des Werkstücks abhängigen Änderung der Bearbeitungskinematik während eines Bearbeitungshubs Modifikationen, insbesondere Flankenlinienmodifikationen auf dem Werkstück zu erzeugen. Ist dies der Fall, so wirken sich Geometrieabweichungen des Schälrads an jeder Axialvorschubposition des Werkstücks leicht unterschiedlich aus. Um dies zu kompensieren, muss die oben beschriebene Kompensation der Geometrieabweichungen des Schälrads für jede Axialvorschubposition separat bestimmt werden. Dabei ist in der Simulation zu berücksichtigen, welche Modifikation, insbesondere Flankenlinienmodifikation am Werkstück an den verschiedenen Breitenlinienpositionen erzeugt werden soll. Als Ergebnis ergibt sich so eine korrigierte Bearbeitungskinematik, welche rein von der Axialvorschubposition des Werkstücks abhängt. Diese Abhängigkeit von der Axialvorschubposition ist dabei unabhängig vom gewählten Axialvorschub pro Werkstückumdrehung. Insbesondere gibt es keine direkte Abhängigkeit von der Werkstückdrehposition und/oder Werkzeugdrehposition.

In einer weiteren Ausführung der Erfindung wird die Bearbeitungskinematik in Abhängigkeit von der gemessenen Geometrie des Werkzeuges bestimmt und/oder korrigiert, wobei die Bearbeitungskinematik während eines Bearbeitungshubes konstant bleibt.

Sollte ursprünglich jedoch ohne von der Axialvorschubposition des Werkstücks abhängigen Änderung der Bearbeitungskinematik das Werkstück bearbeitet werden, so wirken sich die Geometrieabweichungen des Schälrads an jeder Axialvorschubposition des Werkstücks gleich auf die am Werkstück erzeugte Geometrie aus.

Die Erfindung sieht in einer bevorzugten Variante daher vor, dass die zur Kompensation der gemessenen Geometrieabweichungen des Schälrads nötigen Änderungen der Bearbeitungskinematik während eines Bearbeitungshubs nicht verändert werden. Da beim Wälzschälen das Werkstück im Allgemeinen in mehreren Hüben bearbeitet wird, ist es jedoch durchaus möglich und auch sinnvoll, die Änderung der Bearbeitungskinematik für jeden Hub separat zu bestimmen und für jeden Hub entsprechend einzustellen.

Bei dem erfindungsgemäßen Verfahren wird angenommen, dass alle Schälradzähne gleichmäßig über den Umfang des Schälrads verteilt sind und dass alle Schneidkanten, im Rahmen einer gegebenen und/oder üblichen Toleranz den gleichen räumlichen Verlauf aufweisen. Dadurch genügt es die Geometrie eines einzelnen Schälradzahnes zu vermessen. Um das Messergebnis zu verbessern, ist es jedoch durchaus möglich mehr als nur einen Schneidradzahn zu vermessen und die Messergebnisse zu mitteln.

Erfindungsgemäß kann die in Abhängigkeit von der vermessenen Geometrie bestimmte Bearbeitungskinematik keine periodische Komponente aufweist, die wiederkehrend mit jeder Umdrehung des Werkzeugs auftritt.

In einer vorteilhaften Weiterbildung der Erfindung wird durch die Bearbeitungskinematik eine Abweichung in der Zahndicke, im Profilwinkel und/oder im Fußkreisradius kompensiert und/oder eine Winkellage der geschälten Lücke in dem Werkstück gezielt vorgegeben wird.

Änderungen der Größen der Bearbeitungskinematik haben im Allgemeinen hauptsächlich folgende Einflüsse auf die im Wälzschälen gefertigte Verzahnung sowie auf Span- und/oder Freiwinkel.

Die Koppelposition bestimmt an welcher Winkelposition, bezogen auf die Drehachse des Werkstücks die Lücken ausgebildet werden.

Der Achsabstand beeinflusst die Profilwinkel auf linker und rechter Flanke, die Zahndicke, sowie den Fußkreisradius.

Der Achskreuzwinkel sowie der Spanflächenversatz beeinflusst die Profilwinkel auf linker und rechter Flanke und die Zahndicke sowie die Span- und Freiwinkel. Zusätzlich beeinflusst der Spanflächenversatz geringfügig den Fußkreisradius.

Die im Rahmen dieser Erfindung vermessenen Größen am Schälrad haben im Allgemeinen hauptsächlich folgende Einflüsse auf die im Wälzschälen gefertigte Verzahnung sowie auf Span- und/oder Freiwinkel.

Der Außendurchmesser des Schälrads beeinflusst den Fußkreisradius. Die Zahndicke des Schälrads beeinflusst die Zahndicke. Die Drehposition des Schälrads beeinflusst die Winkellage der Lücken. Die Profillinie des Schälrads beeinflusst die Profillinie des Werkstücks. Die Flankenlinie beeinflusst den Freiwinkel, sowie den Verlauf der Schneidkante am Schälrad, wenn diese durch rechnerisches Schneiden der Spanfläche mit dem Schälradzahn bestimmt wird, und somit auch die Profillinie. Der Verlauf der Schneidkante des Schälrads beeinflusst die Profillinie. Die Lage der Spanfläche sowie deren Orientierung beeinflusst die Zahndicke, den Fußkreisradius sowie die Profillinie, insbesondere den Profilwinkelfehler. Der Nachschliffzustand beeinflusst die Zahndicke den Fußkreisradius sowie die Profillinie, insbesondere den Profilwinkelfehler.

Aus der oben genannten Aufstellung ergibt sich, durch Änderung welcher Größen der Bearbeitungskinematik die Einflüsse der im Rahmen dieser Erfindung primär vermessenen Größen am Schälrad auf die erzeugte Verzahnung kompensiert werden können.

In einer weiteren bevorzugten Ausführungsform der Erfindung wird mindestens eine der Größen der Bearbeitungskinematik wie beispielsweise eine Koppelposition, ein Achsabstand, ein Achskreuzwinkel und ein Spanflächenversatz bestimmt.

Ferner wird mittels einer Überprüfung beurteilt, ob mit dem Schälrad und einer Bearbeitungskinematik eine vorgegebene Fertigungstoleranz eingehalten werden kann und/oder technologische Größen innerhalb eines vorgegebenen Bereichs liegen wobei abhängig vom Ergebnis der Überprüfung von der Maschine entsprechende Arbeitsabläufe ausgegeben werden.

Die von der Maschine ausgegebenen Arbeitsabläufe können beispielsweise an einen Bediener gerichtete Handlungsvorschläge und/oder auch mehrere unterschiedliche von der Maschine durchzuführende Arbeitsvorgänge sein. Dabei ist es möglich, dass ein Bediener einen der mehreren von der Maschine vorgeschlagenen Arbeitsvorgänge auswählt und die Maschine den entsprechend ausgewählten Arbeitsvorgang ausführt. Ebenfalls ist es vorgesehen, dass die Maschine Arbeitsvorgänge eigenständig durchführt.

Ferner können die Ergebnisse einer oder mehrerer dieser Messungen zum Bestimmen der absoluten Lage und/oder des räumlichen Verlaufs der Schneidkante genutzt werden, um die Bearbeitungskinematik beim Wälzschälen optimal auf die tatsächliche Geometrie des Schälrads einzustellen, um so die Abweichungen des Schälrads von der Sollgeometrie bzw. Solllage in der Bearbeitungsmaschine zumindest teilweise zu kompensieren, um so die sich am Werkstück ergebenden Abweichungen zu reduzieren.

- Ist mindestens eine der Abweichungen des Schälrads von der Sollgeometrie bzw. Solllage in der Bearbeitungsmaschine so groß, oder
- Ist eine Kombination aus mindestens zwei Abweichungen so geartet

dass die dadurch am Werkstück entstehende Abweichung durch eine Anpassung der Bearbeitungskinematik nicht mehr soweit kompensiert werden kann, dass das Werkstück innerhalb einer vorgegebenen Toleranz gefertigt werden kann, so sieht die Erfindung vor, die Bearbeitung mit diesem Schälrad zunächst nicht weiter fortzuführen und

- den Bediener auf dieses Problem hinzuweisen und ihn entscheiden zu lassen, ob trotz der Abweichung mit diesem Schälrad gefertigt werden soll oder
- den Bediener auf dieses Problem hinzuweisen und ihn aufzufordern das Schälrad zu tauschen (manuell oder über einen ggf. vorhandenen Werkzeugwechsler) bzw. die Bearbeitung abzubrechen oder
- Wenn ein automatischer Werkzeugwechsler an der Bearbeitungsmaschine vorhanden ist, das Schälrad automatisch aus der Bearbeitungsmaschine auszuschleusen und die Bearbeitung mit einem anderen Schälrad aus dem Werkzeugwechsler fortzusetzten oder
- Wenn die Bearbeitung als Zweiflankenbearbeitung vorgesehen war, die Bearbeitung ggf. nach Bestätigung durch den Bediener als Einflankenbearbeitung durchzuführen, wenn durch eine geeignete Anpassung der Bearbeitungskinematik die entstehende Abweichung am Werkstück innerhalb einer vorgegebenen Toleranz liegt.

In diesem Zusammenhang kann unter technologischen Größen beispielsweise Span- und Freiwinkel verstanden werden.

Die vorliegende Erfindung betrifft ferner eine Vorrichtung gemäss Anspruch 8 zum Durchführen des Verfahrens nach einem der vorhergehenden Ansprüche.

Ferner kann die Messeinheit dazu ausgelegt sein, eine oder mehrere der nachfolgenden Größen des Schälrads zu bestimmen:

a) einen Außendurchmesser des Schälrads an einer oder mehreren axialen Positionen des Schälrads,
b) eine Zahndicke des Schälrads an einer oder mehreren axialen Positionen des Schälrads,
c) eine Drehposition des Schälrads, insbesondere die Drehposition einer oder mehrere Zähne auf dem Schälrad, bezogen auf die Werkzeugspindelachse,
d) eine Profillinie des Schälrads,
e) eine Flankenlinie des Schälrads,
f) einen Verlauf der Schneidkante des Schälrads,
g) eine Lage der Spanfläche und/oder deren Orientierung, insbesondere Span- und Treppenwinkel,

Ferner kann die Vorrichtung dazu ausgelegt sein, die räumliche Lage der Messeinheit in Bezug auf die Spindelachse des Schälrads zu kalibrieren, indem ein Prüfbund oder einen Kegel eines Spannfutters, der auf einer Spindelachse des Schälrads an der Werkzeugaufnahme und/oder am Schälrad angeordnet ist, mit der Messeinheit vermessen wird, so dass der Abstand zwischen Messeinheit und Spindelachse bestimmbar ist, um die Messeinheit entsprechend zu kalibrieren.

Im Allgemeinen ist die relative Lage der Messeinheit zur Werkzeugspindel in der Bearbeitungsmaschine nicht exakt bekannt. So kann sich diese insbesondere durch Wärmegang der Maschine zeitlich verändern. Um solche Wärmegänge kompensieren zu können, kann es erforderlich sein, eine Kalibrierung der Messeinheit durchzuführen. Insbesondere kann es dabei wichtig sein, den Abstand der Messeinheit zur Werkzeugspindelachse, insbesondere des Messkugelmittelpunkts zur Werkzeugspindelachse zu kalibrieren. Hierzu kann beispielsweise auf dem Schälrad und/oder auf dem Werkzeughalter und/oder auf der Werkzeugspindel ein vorzugsweise geschliffener Prüfbund mit bekanntem Durchmesser vorgesehen sein, welcher mit der Messeinheit vermessen wird. Wird beispielsweise ein schaltend arbeitender Messtaster verwendet, so kann der Prüfbund mit diesem angetastet werden. Daraus lässt sich der Abstand zwischen Messeinheit zu Werkzeugspindelachse bestimmen und die Messeinheit entsprechend kalibrieren. Insbesondere kann dadurch der Abstand zwischen Messkugel und Werkzeugspindelachse bestimmt werden. Alternativ zu einem extra dafür gefertigten Prüfbund kann auch ein Kegel eines Spannfutters zur Aufnahme des Schälrads zur Kalibrierung genutzt werden.

Ferner kann die Steuereinheit dazu ausgelegt sein, die räumliche Lage der Messeinheit in Bezug auf eine Spindelachse des Schälrads zu kalibrieren, vorzugsweise vor dem Durchführen einer Vermessung des Schälrads.

Alternativ zu einem Prüfbund kann auch eine an der Spindelachse des Schälrads konzentrisch zur Spindelachse angeordnete Kugel sowie ein konzentrisch zur Spindelachse angeordneter Kegel, insbesondere der Hohlschaftkegel der Werkzeugaufnahme vermessen werden.

Dabei kann vorgesehen sein, dass die Vorrichtung dazu ausgelegt ist, bei bekanntem Zahnprofil, insbesondere einem Profilwinkel, des Schälrads, das Zahnprofil des in der Werkzeugaufnahme befindlichen Schälrads mittels der Messeinheit zu bestimmen und mit dem bekannten Zahnprofil zu vergleichen, um aus einer Abweichung zwischen dem bekannten Zahnprofil zu dem gemessenen Zahnprofil den Fehler in der relativen Lage zwischen Messeinheit und Schälrad zu bestimmen.

Für den Fall, dass ein solcher Prüfbund und/oder Kegel nicht vorhanden ist oder nicht angefahren werden kann, sieht die Erfindung eine weitere Methode zur Bestimmung der relativen Lage zwischen Messekugelmittelpunkt und Werkzeugspindelachse vor. Dabei wird ausgenutzt, dass ein Fehler in der relativen Lage zwischen Messkugelmittelpunkt und Werkzeugspindelachse bei einer Messung des Profils der Schälradzähne zu einem Fehler im gemessenen Profil, insbesondere im gemessenen Profilwinkel führt. Ist das Profil der Schälradzähne bekannt, so kann eine Messung des Profils in der Maschine durchgeführt werden, das gemessene Profil mit dem Ist-Profil der Schälradzähne verglichen werden und aus der Abweichung Fehler in der relativen Lage zwischen Messkugelmittelpunkt und Werkzeugspindelachse bestimmt werden.

Dabei ist das Schälrad während des Vermessens durch die Messeinheit in der Werkzeugaufnahme aufgenommen. Dadurch ist es möglich, das Schälrad in seiner Geometrie und/oder seiner Lage zu bestimmen und eventuelle Fehler, die hieraus resultieren, zu kompensieren. Nach dem Stand der Technik erfolgt bspw. die Bestimmung der Geometrie des Schälrads außerhalb der Bearbeitungsmaschine, so dass Fehlerquellen, die aufgrund der Befestigung des Schälrads an der Werkzeugaufnahme auftreten, nicht berücksichtigt werden können.

Diesen Nachteil überwindet die Erfindung und sieht ein Vermessen des Schälrads in der eingespannten Position in der Werkstückaufnahme vor, die auch für die Bearbeitung des Werkstücks beibehalten wird. Dadurch werden etwaige Fehlstellungen des Schälrads in der Werkzeugaufnahme beim Erstellen einer Bearbeitungskinematik berücksichtigt und es wird ein insgesamt besseres Ergebnis erzielt.

Weiter kann nach der vorliegenden Erfindung vorgesehen sein, dass die Steuereinheit ferner dazu ausgelegt ist, eine Fertigungssimulation eines Wälzschälens auf Grundlage einer von der Messeinheit vorgenommenen Vermessung des in der Werkzeugaufnahme befindlichen Werkzeugs auszuführen und anhand dieser die Bearbeitungskinematik für einen Wälzschälvorgang mit dem vermessenen Werkzeug zu erzeugen.

Dabei kann auch vorgesehen sein, dass eine Vielzahl von Fertigungssimulationen durchgeführt wird und der Wälzschälvorgang anhand derjenigen Bearbeitungskinematik durchgeführt wird, die in der Fertigungstoleranz oder anderen Vorgaben die besten Ergebnisse erzielt hat.

Vorzugsweise ist die Steuereinheit dazu ausgelegt, dass bei einem bekannten Soll-Zahnprofil des Werkzeugs, insbesondere einem Profilwinkel eines Schälrads, das tatsächliche Zahnprofil des in der Werkzeugaufnahme befindlichen Werkzeugs bestimmt und mit dem Soll-Zahnprofil verglichen wird, um aus einer Abweichung zwischen dem Soll-Zahnprofil zu dem gemessenen tatsächlichen Zahnprofil einen Fehler in der relativen Lage zwischen Messeinheit und Werkzeug zu bestimmen.

Nach einer optionalen Fortbildung der Erfindung ist die Messeinheit demnach ferner dazu ausgelegt, die Geometrie des Schälrads zu vermessen und/oder die Lage des Schälrads in der Vorrichtung zu vermessen.

Ferner kann vorgesehen sein, dass die Messeinheit über einen Mechanismus in einen Arbeitsraum der Vorrichtung, in dem das Wälzschälen ausgeführt wird, verfahrbar ist, wobei vorzugsweise der Mechanismus an einem Gegenständer der Vorrichtung befestigt ist. Durch die Möglichkeit, die Messeinheit in den Arbeitsraum ein- oder auszufahren, kann diese den widrigen Umständen während des Wälzschälens entzogen werden, da während dem Wälzschälen Kühlflüssigkeit und Späne, nicht zuletzt wegen der hohen Umdrehungsgeschwindigkeiten von Werkzeug und Werkstück, aus dem Kontaktbereich von Werkstück und Schälrad (Werkzeug) in den Umgebungsraum verteilt werden.

Alternativ dazu kann auch vorgesehen sein, dass die Messeinheit am Ständer oder am Maschinenbett einer solchen Bearbeitungsmaschine befestigt ist. Nach einer optionalen Modifikation der Erfindung ist die Messeinheit fest an der Vorrichtung angeordnet, vorzugsweise an einem Gegenständer und/oder in einem Arbeitsraum der Vorrichtung, in dem das Wälzschälen ausgeführt wird. Um die Messeinheit vor den oben beschrieben widrigen Einflüssen zu schützen, kann ein die Messeinheit schützendes Gehäuse vorgesehen sein.

Weiter kann mit einer Fortbildung der Erfindung vorgesehen sein, dass die Vorrichtung ferner dazu ausgelegt ist, eine zum Vermessen des Schälrads erforderliche Relativbewegung zwischen Schälrad und Messeinheit durch eine bei der Schälbearbeitung zur Verfügung stehende Bewegungsachse des Schälrads zu realisieren.

Demnach wird die zum Vermessen des Schälrads erforderliche Relativbewegung zwischen Schälrad und Messeinheit durch diejenigen Bewegungsachsen erzeugt, über die das Schälrad ohnehin für das Wälzschälen verfügt. Die Notwendigkeit weiterer Bewegungsachsen und damit in Verbindung stehender Antriebe entfällt damit.

Dennoch kann nach der Erfindung auch vorgesehen sein, eine zum Vermessen des Schälrads erforderliche Relativbewegung zwischen Schälrad und Messeinheit durch eine Bewegungsachse zu realisieren, die bei der Schälbearbeitung durch das Schälrad nicht zur Verfügung steht. Wird bspw. die Messeinheit am Ständer befestigt, so führen die Achsen zum Verfahren des Ständers zu keiner Änderung der Relativstellung. Optional können daher auch Achsen zum Einstellen der Relativstellung zwischen Messeinheit und Schälrad genutzt werden, welche nicht zur Schälbearbeitung zur Verfügung stehen.

Weiter kann vorgesehen sein, dass die Messeinheit mit einem mechanischen Messsensor versehen ist, und vorzugsweise eine Messspitze eines Messtasters mit einer Kugel, insbesondere einer Rubinkugel versehen ist. Die Messung durch den Messsensor kann schaltend oder messend erfolgen.

Als mechanischer Messsensor kann vom Funktionsprinzip ein solcher eingesetzt werden, der aus Koordinatenmessgeräten und Verzahnungsmessmaschinen bekannt ist. Solche Messsensoren sind auch in einer robusten Ausführung zum Einbau und Einsatz im Bearbeitungsraum von Bearbeitungsmaschinen erhältlich. Als Messspitze des Messtasters wird bevorzugt eine Kugel, beispielsweise eine Rubinkugel eingesetzt, wie dies beispielsweise bei Verzahnungsmessungen üblich ist.

Des Weiteren kann die Messung aber auch optisch, insbesondere mit einem Laser erfolgen.

Darüber hinaus umfasst die Erfindung auch die Umsetzung, wonach die Messeinheit mit einem optischen Messsensor versehen ist, vorzugsweise mit einem Triangulationssensor, einem Bildverarbeitungssensor, einem Konfokalsensor, einem Sensor zur Fokusvariation, und/oder einem Interferometer.

Als optische Abstandssensoren können solche eingesetzt werden, welche ebenfalls aus Koordinatenmessgeräten bekannt sind, insbesondere Triangulationssensoren, Bilderverarbeitungssensoren, Fokusvariation, Konfokalsensoren oder Interferometer. Um solche Sensoren vor Spänen und ggf. Kühlmittel zu schützen, können diese optional durch eine Einhausung oder ein Gehäuse entsprechend geschützt werden.

Nach einer weiteren bevorzugten Ausführung kann das Schälrad sowohl innen als auch außenverzahnt sein. Es kann monolithisch oder als ein mit Wendeschneidplatten bestücktes Schälrad ausgeführt sein.

Vorzugsweise ist die Steuereinheit ferner dazu ausgelegt, auf Grundlage eines oder mehrerer der durch die Messeinheit bestimmten Größen des Schälrads, die Bearbeitungskinematik bei einem nachfolgenden Wälzschälvorgang auf die tatsächliche Geometrie des Schälrads und/oder Lage des Schälrads in der Vorrichtung einzustellen, um Abweichungen des Schälrads von der Sollgeometrie und /oder Solllage zu kompensieren.

Die so bestimmten Größen bzw. die Ergebnisse einer oder mehrere dieser Messungen können genutzt werden, um die Bearbeitungskinematik beim Wälzschälen optimal auf die tatsächliche Geometrie des Schälrads einzustellen, um so die Abweichungen des Schälrads von der Sollgeometrie bzw. Solllage in der Bearbeitungsmaschine zumindest teilweise zu kompensieren, damit die sich am Werkstück ergebenden Abweichungen reduziert werden.

Nach einer weiteren Fortbildung der Erfindung ist die Steuereinheit ferner dazu ausgelegt, eine Fertigungssimulation eines Wälzschälens auf Grundlage einer von der Messeinheit vorgenommenen Vermessung des in der Werkzeugaufnahme befindlichen Schälrads auszuführen und anhand dieser die Bearbeitungskinematik für einen Wälzschälvorgang mit dem vermessenen Schälrad zu erzeugen.

Ferner kann die Steuereinheit dazu ausgelegt sein, die räumliche Lage der Messeinheit in Bezug auf eine Spindelachse des Schälrads zu kalibrieren, vorzugsweise vor dem Durchführen einer Vermessung des Schälrads.

Dabei kann vorgesehen sein, dass die Vorrichtung dazu ausgelegt ist, bei bekanntem Zahnprofil, insbesondere einem Profilwinkel, des Schälrads, das Zahnprofil des in der Werkzeugaufnahme befindlichen Schälrads mittels der Messeinheit zu bestimmen und mit dem bekannten Zahnprofil zu vergleichen, um aus einer Abweichung zwischen dem bekannten Zahnprofil zu dem gemessenen Zahnprofil den Fehler in der relativen Lage zwischen Messeinheit und Schälrad zu bestimmen.

Ferner kann die Vorrichtung dazu ausgelegt sein, die räumliche Lage der Messeinheit in Bezug auf die Spindelachse des Schälrads zu kalibrieren, indem ein Prüfbund, der auf einer Spindelachse des Schälrads an der Werkzeugaufnahme und/oder am Schälrad angeordnet ist, mit der Messeinheit vermessen wird, so dass der Abstand zwischen Messeinheit und Spindelachse bestimmbar ist, um die Messeinheit entsprechend zu kalibrieren.

Alternativ zu einem Prüfbund kann auch eine an der Spindelachse des Schälrads konzentrisch zur Spindelachse angeordnete Kugel sowie ein konzentrisch zur Spindelachse angeordneter Kegel, insbesondere der Hohlschaftkegel der Werkzeugaufnahme vermessen werden. Nach einer weiteren Fortbildung der Erfindung ist die Steuereinheit ferner dazu ausgelegt, zu beurteilen, ob eine gewünschte Fertigungstoleranz mit dem durch die Messeinheit vermessenen Schälrad erzielbar ist oder nicht.

Dabei kann vorgesehen sein, dass, wenn die gewünschte Fertigungstoleranz nicht erzielbar ist, bzw. mindestens eine der Abweichungen des Schälrads von der Sollgeometrie bzw. Solllage in der Bearbeitungsmaschine so groß ist, oder eine Kombination aus mindestens zwei Abweichungen so geartet ist, dass die dadurch am Werkstück entstehende Abweichung durch eine Anpassung der Bearbeitungskinematik nicht mehr kompensiert werden kann, die Vorrichtung dazu ausgelegt ist:

einen Bediener der Vorrichtung über eine Benachrichtigungseinheit auf dieses Problem hinzuweisen, um ihn entscheiden zu lassen, ob trotz der Abweichung mit dem Schälrad eine Bearbeitung erfolgen soll,

den Bediener über die Benachrichtigungseinheit auf dieses Problem hinzuweisen und ihn aufzufordern das Schälrad manuell oder über einen vorhandenen Werkzeugwechsler zu tauschen,

wenn ein automatischer Werkzeugwechsler an der Bearbeitungsmaschine vorhanden ist, das Schälrad automatisch aus der Bearbeitungsmaschine auszuschleusen und die Bearbeitung mit einem anderen Schälrad aus dem Werkzeugwechsler fortzusetzen,

wenn die Bearbeitung als Zweiflankenbearbeitung vorgesehen war, die Bearbeitung, vorzugsweise nach Bestätigung durch den Bediener, als Einflankenbearbeitung durchzuführen, wenn durch eine geeignete Anpassung der Bearbeitungskinematik die entstehende Abweichung am Werkstück innerhalb einer vorgegebenen Toleranz liegt, oder

die Bearbeitung abzubrechen.

Weitere Merkmale, Einzelheiten und Vorteile der Erfindung werden anhand der Erläuterung von mehreren Beispielen der Erfindung nachfolgenden in der Figurenbeschreibung ersichtlich. Dabei zeigen:

Fig. 1:   eine perspektivische Ansicht einer erfindungsgemäßen Vorrichtung zum Wälzschälen,

Fig. 2:   eine perspektivische Ansicht einer erfindungsgemäßen Vorrichtung zum Wälzschälen nach einer weiteren Ausführungsform,

Fig. 3:   eine schematische Darstellung zur Erläuterung der Kalibrierung von Messeinheit und Schälrad bzw. ein Vermessen des Schälrads,

Fig. 4:   eine Skizze bei der die erfindungsgemäße Vorrichtung eine Kalibrierung von Messeinheit und Schälrad vornimmt,

Fig. 5:   eine Darstellung des Schälrads, und

Fig. 6:   eine Darstellung der Profile von linker und rechter Flanke des Schälrads in Polarkoordinaten.

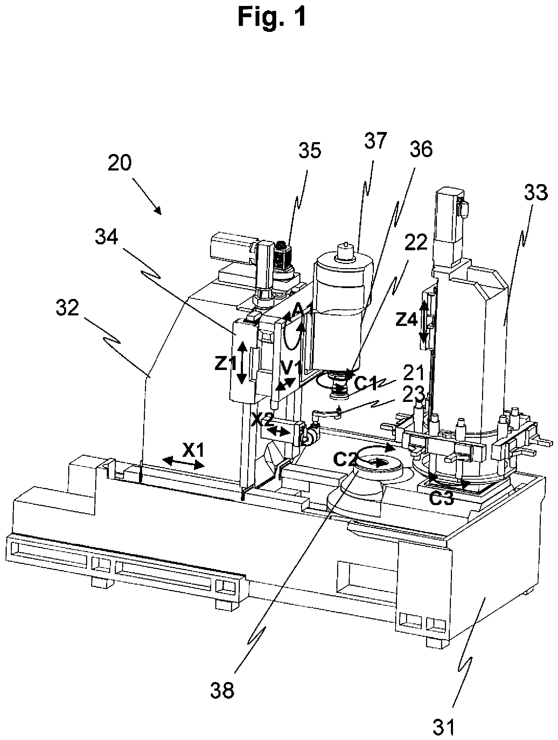

Figur 1 zeigt dabei eine Perspektivansicht der erfindungsgemäßen Vorrichtung 20. Es ist eine Bearbeitungsmaschine zum Wälzschälen abgebildet, bei der auf einem Maschinenbett 31 ein Ständer 32 sowie ein Gegenständer 33 angeordnet ist. An dem Ständer 32 ist über einen verfahrbaren Schlitten 34 ein Bearbeitungskopf 36 befestigt, der über eine Werkzeugaufnahme 22 das Schälrad 21 aufnehmen kann.

Der Schlitten 34 sowie der daran befestigte Bearbeitungskopf 36 können in eine Vielzahl von Richtungen bewegt werden. So kann der Schlitten entlang den Achsen X1 und Z1 verfahren werden, der Bearbeitungskopf 36 darüber hinaus entlang der Achse V1. Ferner kann der Bearbeitungskopf um eine zur Achse X1 parallelen Achse A1 rotiert werden. Die Achse C1 ist dabei die Spindelachse des Schälrads 21.

Das mit der Spindel zu bearbeitende Werkstück (nicht dargestellt) wird dabei auf dem Tisch 38 angeordnet. Die dabei verwendete Werkstück-Spannvorrichtung ist aus Gründen der besseren Übersichtlichkeit nicht dargestellt.

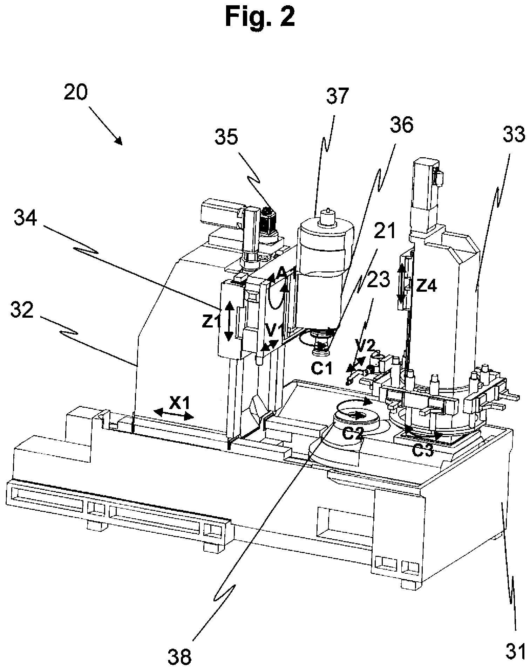

Figur 2 zeigt eine Perspektivansicht einer weiteren Ausführungsform der erfindungsgemäßen Vorrichtung 20, die der in Figur 1 beschriebenen Vorrichtung bis auf die Anordnung der Messeinheit 23 im Wesentlichen entspricht. Dabei werden für identische Bestandteile auch dieselben Bezugszeichen wie in Figur 1 verwendet.

Im Unterschied zu Figur 1 wird in Figur 2 die Messeinheit 23 am Gegenständer 33 angeordnet. Auch hier kann für die Relativbewegung von Schälrad 21 und Messeinheit 23 eine Bewegungsachse V2 vorgesehen sein. Damit wird das Zustellen an die Messposition der Messeinheit 23 vereinfacht.

Ferner ist die Vorrichtung 20 mit einer Messeinheit 23 versehen, die in der vorliegenden Ausführungsform an dem Ständer 32 befestigt ist. Die Messeinheit 23 verfügt dabei über eine Bewegungsmechanik, um eine Relativbewegung gegenüber dem in der Werkzeugaufnahme 22 aufgenommenen Schälrad 21 zu ermöglichen. So kann die Messeinheit 23 entlang einer zur Achse X1 parallelen Achse X2 bewegt werden, da aufgrund der Befestigung von Messeinheit 23 und Bearbeitungskopf 26 am Ständer 32 eine Relativbewegung der beiden Bestandteile in X-Richtung nicht möglich wäre. Für das Ausführen der Bewegungen weist die Vorrichtung 20 eine Vielzahl an Antrieben auf, bspw. den Antrieb 35 für die Z1-Achse oder den Antrieb 37 für die Werkzeugspindel.

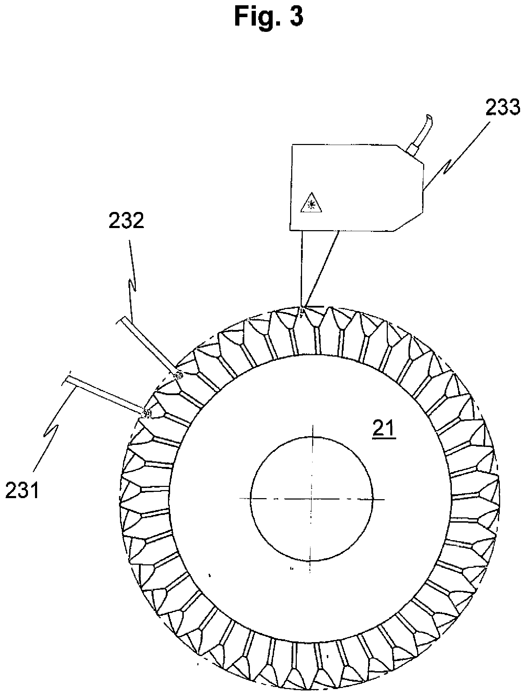

Figur 3 zeigt eine schematische Darstellung des Schälrads 21, das mit Hilfe der Messeinheit 23 vermessen wird. Beispielhaft für die Messeinheit 23 misst ein erster Taster 231 die Zahnflanke des Schälrads 21 und ein zweiter Taster 232 die Spanfläche. Ein optischer Sensor 233, bspw. ein Laser, kann ebenfalls Teil der Messeinheit 23 sein und für die Vermessung oder eine Kalibrierung der Messeinheit 23 genutzt werden.

Im Folgenden werden einige Beispiele zur besseren Erläuterung der Erfindung dargestellt:

Beispiel 1)

Beim Wälzschälen sind die genaue Lage und die genaue Form der Schneidkante des Schälrads von besonderer Bedeutung, um das gewünschte Profil auf dem Werkstück zu erzeugen.

Typischerweise wird das Profil von Schälrädern von Werkzeugherstellern mit hoher Genauigkeit gefertigt, die genaue Lage der Schneidkante ergibt sich jedoch erst durch das Schleifen der Spanfläche. Ist ein Schälrad verschlissen, wird die Spanfläche nachgeschärft und es bildet sich eine neue Schneidkante. Die Lage und die Form der Schneidkante ergeben sich aus der Lage und der Orientierung der nachgeschliffenen Spanfläche. Ist die Spanfläche beispielsweise durch eine Ebene beschrieben, so kann die Orientierung durch einen Normalenvektor der Spanebenen definiert werden, die Lage durch einen Aufpunkt oder alternativ durch den Abstand der Ebene vom Ursprung des gewählten Koordinatensystems. Ist die Spanfläche beispielsweise durch einen Kegel beschrieben, so kann die Orientierung durch die Richtung der Rotationsachse des Kegels sowie dem Öffnungswinkel des Kegels beschrieben werden und die Lage durch die Position der Kegelspitze.

Um beispielsweise Lage und Orientierung einer Spanebene zu bestimmen, genügt es drei Punkte zu vermessen, welche die Ebene eindeutig bestimmen. Um die Genauigkeit der Bestimmung zu erhöhen, ist es jedoch auch möglich, mehr als drei Punkte zu vermessen.

Um beispielsweise Lage und Orientierung eines als konzentrisch zur Spindelachse orientiert angenommenen Kegels zu bestimmt, genügt es zwei Punkte zu vermessen. Auch hier können zur Verbesserung der Genauigkeit mehr Punkte vermessen werden.

Die Erfindung sieht daher als einen möglichen Anwendungsfall vor, die Lage und die Orientierung der Spanfläche zu bestimmen. Diese Bestimmung muss so erfolgen, dass die Lage und die Orientierung der Spanfläche bezüglich des zugehörigen Schälradzahns bekannt sind. Dazu wird bevorzugt zusätzlich mit der Messeinheit die Lage des Schälradzahns in axialer Richtung und/oder die Drehposition des Schälradzahns bestimmt. Eine Bestimmung der axialen Lage des Schälradzahns bzw. mehrere oder aller Schälradzähne ist insbesondere bei konischen Schälrädern nötig. Die axiale Lage kann dabei als die Position eines Stirnschnitts des Schälrads verstanden werden, in dem die Schälradzähne eine bestimmte Zahndicke haben. Für zylindrische Schälräder ist diese Zahndicke in allen Strirnschnitten gleich, so dass eine Bestimmung der axialen Lage des Schälradzahns werde möglich noch nötig ist, für beispielsweise konische ändert sich diese Zahndicke jedoch von Stirnschnitt zu Stirnschnitt.

Um Drehposition des Schälradzahns zu bestimmen, genügt es eine Flanke an einem Punkt zu vermessen. Soll beispielsweise bei einem konischen Schälrad die axiale Lage Bestimmt werden, so sind mindestens zwei Punkte zu vermessen, um die Zahndicke in einem Stirnschnitt zu bestimmen.

Ist die Spanfläche relativ zum Schälradzahn bestimmt, so kann rechnerisch durch Schneiden der Spanfläche mit den Flanken des Schälrads die Schneidkante bestimmt werden.

Die Geometrie der Flanken kann dabei entweder gemäß Zeichnung übernommen werden oder durch eine Profil- und/oder Flankenlinienmessung optional ebenfalls in der Bearbeitungsmaschine bestimmt werden. Diese so bestimmte Schneidkante kann dann beispielsweise genutzt werden, um die Bearbeitungskinematik so einzustellen, dass sowohl Zahndicke als auch die Profilwinkel auf linker und rechter Flanke des Werkstücks innerhalb der Toleranz liegen. Optional kann zusätzlich geprüft werden, ob bei der so bestimmten Bearbeitungskinematik der effektive Freiwinkel und/oder der effektive Spanwinkel innerhalb gewünschter Grenzen liegt.

Liegt der Freiwinkel außerhalb der Toleranz, so kann optional die Bearbeitung nicht fortgesetzt werden und das Schälrad wieder ausgeschleust bzw. entnommen werden um Schäden am Schälrad und/oder Werkstück zu vermeiden.

<u>Beispiel 2)</u>

Eine Erweiterung des letzten Beispiels sieht vor, dass zusätzlich zur Lage und Orientierung der Spanfläche der Außendurchmesser des Schälrads vermessen wird. Insbesondere wenn das Schälrad konisch ist, kann es dabei von Vorteil sein, den Außendurchmesser an mehreren axialen Positionen des Schälrads zu messen und so den einhüllenden Kegel zu bestimmen. Dieser einhüllende Kegel bzw. einhüllende Zylinder im Falle eines zylindrischen Schälrads kann genutzt werden, um durch einen Schnitt mit der Spanfläche den Teil der Spanfläche zu bestimmen, der den Fußbereich des Werkstücks fertigt, um so die im Schälprozess erzeugte Fußkontur und insbesondere den erzeugten Fußkreisradius zu bestimmen. Wird der Fußkreisradius mit der in Beispiel 1 bestimmten Bearbeitungskinematik nicht innerhalb der gewünschten Toleranz erzeugt, so kann entweder mittels einer Ausgleichrechnung durch Variation der zur Verfügung stehenden Freiheitgrade der Bearbeitungskinematik versucht werden, eine Bearbeitungskinematik zu bestimmen, sodass Zahndicke, Profilwinkel und Fußkreisradius innerhalb der jeweils gewünschten Toleranz liegen oder, sofern dies nicht möglich ist, kann die Bearbeitung mit diesem Schälrad zunächst gestoppt werden.

War die Bearbeitung als Zweiflankenbearbeitung vorgesehen, so kann optional, beispielsweise mittels einer Simulation geprüft werden, ob es mit diesem Schälrad im Rahmen einer Einflankenbearbeitung möglich ist, sowohl die Zahndicke und die Profilwinkel auf linker und rechter Flanke sowie den Fußkreisradius innerhalb der gewünschten Toleranz zu erreichen. Ist dies möglich, so kann die Bearbeitung automatisch oder nach Bestätigung durch den Bediener einflankig durchgeführt werden. Auch hier kann optional zusätzlich geprüft werden, ob bei der so bestimmten Bearbeitungskinematik der effektive Freiwinkel und/oder der effektive Spanwinkel innerhalb gewünschter Grenzen liegt, und ggf. die Bearbeitung nicht fortgesetzt wird.

Beispiel 3)

Eine vereinfachte Variante von Beispiel 1 sieht vor, lediglich die Lage der Spanfläche, das heißt insbesondere den Nachschliffzustand des Schälrads zu bestimmen. Dieser ändert sich nach dem Nachschleifen und ist nicht in allen Fällen exakt bekannt. Diese Variante kann dann genutzt werden, wenn die Orientierung der Spanfläche beim Nachschleifen so gut erreicht wird, dass der durch die Abweichung von Sollorientierung an der Schneidkante entstehende Fehler zu einer Abweichung im Profil und/oder der Zahndicke des Werkstücks führt, welcher innerhalb einer gewünschten Toleranz liegt. Hier bei genügt es, die Spanfläche nur an einem Punkt zu vermessen.

Beispiel 4)

Werden bereits vorverzahnte Werkstücke durch Wälzschälen weiterbearbeitet, so ist es wichtig, Schälrad und Werkstück so zu paaren, d.h. die Koppelpositon so zu bestimmen, dass der gewünschte Abtrag auf linker und rechter Flanke erzielt wird. Um diese exakte Paarung sicherzustellen, müssen sowohl die Drehposition des Werkstücks als auch die Drehposition des Schälrads möglichst exakt bekannt sein. Die Drehposition des Werkstücks kann dabei beispielsweise mittels eines Einfädelsensors oder einer Messeinheit zur Messung oder Prüfung des Werkstücks bestimmt werden. Zur Bestimmung der Drehposition des Schälrades kann erfindungsgemäß das Schälrad in der Bearbeitungsmaschine vermessen und so die Drehposition genau bestimmt werden.

Diese Messung kann dabei optional jedes Mal durchgeführt werden, wenn ein Schälrad über die Werkzeugaufnahme aufgenommen wird, insbesondere auch dann, wenn diese Aufnahme automatisiert, beispielsweise über einen Werkzeugwechsler erfolgt. Ist die Werkzeugaufnahme jedoch hinreichend wiederholgenau, was die Drehposition des Schälrads betrifft, so kann es auch ausreichend sein, jedes Schälrad nur einmal zu vermessen und wenn es erneut in der Maschine aufgenommen wird, auf das letzte Messergebnis zurückzugreifen. Das Paaren mit hoher Genauigkeit ist insbesondere dann von besondere Bedeutung, wenn nur wenig Material abgetragen werden soll, wie beispielsweise beim Hartschälen.

Beispiel 5)

Ein weiterer Anwendungsfall bei dem das genaue Paaren und somit die Drehposition des Schälrads von Bedeutung ist, ist das lageorientierte Verzahnen. Dabei wird die Verzahnung am Werkstück in einer fest vorgegebenen Winkelposition erzeugt. Diese kann beispielsweise über eine Nut oder Bohrung am Werkstück oder über eine weitere Verzahnung am Werkstück definiert sein. Insbesondere kann die Verzahnung eine Pfeilverzahnung sein.

Es ist selbstverständlich möglich, die in den Beispielen angegeben Anzahl der zu vermessenden Punkte zu erhöhen, um die Messgenauigkeit durch bessere Statistik zu verbessern.

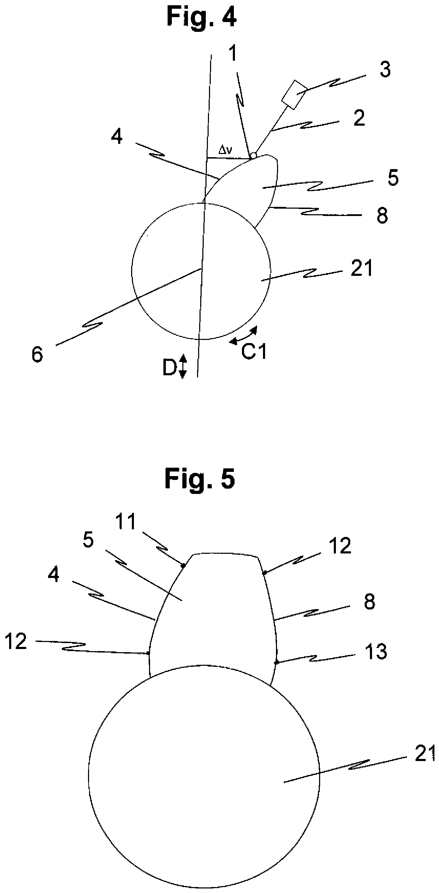

Nachfolgend finden sich unter Bezugnahme auf die Figuren, insbesondere Figuren 4 bis 6, Ausführungen, die für mehrere der vorstehend beschriebenen Beispiele von Relevanz sein können.

Sind in den Beispielen Bearbeitungskinematiken und/oder mit einem bekannten Schälrad und einer bekannten Bearbeitungskinematiken erzeugte Werkstückprofile, Werkstückflankelinien, Winkellage der erzeugten Verzahnung, sowie Frei- und/oder Spanwinkel zu bestimmen, so kann dies beispielsweise mit den heute typischerweise eingesetzten Fertigungssimulationen geschehen. Solche Fertigungssimulationen basieren typischerweise auf einer Abtragssimulation. Bestimmt wird das Material am Werkstück, das durch ein gegebenes Werkzeug, insbesondere gegebener Schneidkanten am Werkzeug, während der Bearbeitung mit einer gegebenen Bearbeitungskinematik entfernt wird. Im Falle des hier betrachteten Wälzschälens kann so die gesamte gefertigte Lücke bestimmt werden.

Um eine Bearbeitungskinematik zur Erzeugung eines vorgegebenen Werkstückprofiles und/oder Zahndicke mit einem gegebenen Schälrad mit einer bekannten Schneidkannte zu bestimmen, können im Rahmen einer Fertigungssimulation die Einflüsse der in der Bearbeitung zur Verfügung stehenden Achsen auf das Werkstückprofil und/oder Zahndicke durch Variation der Achsen bestimmt werden. So kann bspw. bestimmt werden, wie sich die Profilwinkel am Werkstück auf linker und rechter Seite ändern, wenn der Achskreuzwinkel um 0.1° verstellt wird, in dem die Fertigungssimulation mit diesem verstellten Achskreuzwinkel durchgeführt wird und der Profilwinkel der erzeugten Lücke aus dem Simulationsergebnis bestimmt wird. Sind die Einflüsse aller für die Bearbeitung verstellbaren Achsen auf alle zu korrigierenden geometrischen Größen am Werkstück bekannt, so kann unter Annahme eines linearen Zusammenhangs zwischen Achsen und diesen Größen die Bearbeitungskinematik korrigiert werden. Mit dieser korrigierten Bearbeitungskinematik kann die Fertigungssimulation erneut durchgeführt werden und der verbliebene Fehler bestimmt werden und ggf. erneut korrigiert werden, und solange iteriert werden, bis die geometrischen Größen innerhalb einer vorgegebenen Toleranz liegen.

Die Bearbeitungskinematik beim Wälzschälen wird durch folgende nun näher beschriebene, jedoch auch aus allgemeiner Literatur und Veröffentlichungen zum Wälzschälen bekannten Größen beschrieben:

1) Das Kopplungsverhältnis zwischen Werkzeug- und Werkstückspindelachse ist durch das Zähnezahlverhältnis von Werkzeug und Werkstück gegeben und beschreibt das Verhältnis von Werkzeug- und Werkstückspindel Drehzahl während der Bearbeitung, jedoch noch ohne Berücksichtigung des Axialverschubs entlang des Werkstücks.

2) Der Differentialvorschub beschreibt die durch den Axialvorschub entlang des Werkstücks durch die Steigungshöhe des Werkstücks bestimmte Zusatzdrehung des Werkstücks. Diese Zusatzdrehung ist nötig um den Schrägungswinkel am Werkstück zu erzeugen.

3) Die Koppelposition beschreibt einen Satz an Werten für die Drehposition der Werkzeugspindel, für die Drehposition der Werkstückspindel und die Position in axialer Richtung. In der in Figur 1 beispielhaft gezeigten Variante einer Vorrichtung zum Wälzschälen wäre dies ein Satz an Werten für die Achsen C1, C2 und Z1. Durch diese Koppelposition wird festgelegt, wo genau die Lücke am Werkstück, d.h. an welcher Winkelposition durch den Wälzschälprozess erzeugt wird.

4) Der Achsabstand bezeichnet den Abstand zwischen Werkzeug- und Werkstückspindelachse. Der Achsabstand wird in der in Figur 1 beispielhaft gezeigten Variante einer Vorrichtung zum Wälzschälen im Wesentlichen durch die X1-Achse realisiert, wobei auch ein Schwenken um A1 und ein verfahren entlang V1 den Achsabstand beeinflussen.

5) Der Achskreuzwinkel wird hier als der Winkel definiert, um den die Werkzeugspindel gegenüber der Werkstückspindel geneigt ist. In der in Figur 1 beispielhaft gezeigten Variante einer Vorrichtung zum Wälzschälen entspricht dies der Stellung der A1-Achse.

6) Der Spanflächenversatz bezeichnet eine Verschiebung des Werkzeugs entlang der Werkzeugspindelachse. In der in Figur 1 beispielhaft gezeigten Variante einer Vorrichtung zum Wälzschälen, kann dieser durch eine Kombination aus einem Verfahren der Z1 und V1 Achse realisiert werden.

Im Allgemeinen ist die relative Lage der Messeinheit zur Werkzeugspindel in der Bearbeitungsmaschine nicht exakt bekannt. So kann sich diese insbesondere durch Wärmegang der Maschine zeitlich verändern. Um solche Wärmegänge kompensieren zu können, kann es erforderlich sein, eine Kalibrierung der Messeinheit durchzuführen. Insbesondere kann es dabei wichtig sein, den Abstand der Messeinheit zur Werkzeugspindelachse, insbesondere des Messkugelmittelpunkts zur Werkzeugspindelachse zu kalibrieren. Hierzu kann beispielsweise auf dem Schälrad und/oder auf dem Werkzeughalter und/oder auf der Werkzeugspindel ein vorzugsweise geschliffener Prüfbund mit bekanntem Durchmesser vorgesehen sein, welcher mit der Messeinheit vermessen wird. Wird beispielsweise ein schaltend arbeitender Messtaster verwendet, so kann der Prüfbund mit diesem angetastet werden. Daraus lässt sich der Abstand zwischen Messeinheit zu Werkzeugspindelachse bestimmen und die Messeinheit entsprechend kalibrieren. Insbesondere kann dadurch der Abstand zwischen Messkugel und Werkzeugspindelachse bestimmt werden. Alternativ zu einem extra dafür gefertigten Prüfbund kann auch ein Kegel eines Spannfutters zur Aufnahme des Schälrads zur Kalibrierung genutzt werden.

Für den Fall, dass ein solcher Prüfbund und/oder Kegel nicht vorhanden ist oder nicht angefahren werden kann, sieht die Erfindung eine weitere Methode zur Bestimmung der relativen Lage zwischen Messekugelmittelpunkt und Werkzeugspindelachse vor. Dabei wird ausgenutzt, dass ein Fehler in der relativen Lage zwischen Messkugelmittelpunkt und Werkzeugspindelachse bei einer Messung des Profils der Schälradzähne zu einem Fehler im gemessenen Profil, insbesondere im gemessenen Profilwinkel führt. Ist das Profil der Schälradzähne bekannt, so kann eine Messung des Profils in der Maschine durchgeführt werden, das gemessene Profil mit dem Ist-Profil der Schälradzähne verglichen werden und aus der Abweichung Fehler in der relativen Lage zwischen Messkugelmittelpunkt und Werkzeugspindelachse bestimmt werden.

Diese Bestimmung wird im Folgen an der in Figur 4 beispielhaft gezeigten Anordnung skizziert.

Figur 4 zeigt eine im Sinne dieser Erfindung beispielhafte Anordnung von Achsen zum Verfahren des Schälrads in der Bearbeitungsmaschine, sowie eine Schälrad, bei dem vereinfacht nur ein Zahn 5 dargestellt ist. Des Weiteren zeigt die Figur einen schaltenden Messsensor 3 mit Messtaster 2 und Messkugel 1. Die Achse C1 entspricht der Werkzeugspindelachse 6, die Achse D dient zum bevorzugt linearen Verfahren des Schälrads und dient somit unter Anderem zum Verändern der relativen Lage zwischen Messkugelmittelpunkt und Werkzeugspindelachse. Der Messtaster 2 muss dabei nicht parallel zur Achse D ausgerichtet sein. Der Versatz $\Delta V$, welcher die Position der Messkugel in einer Richtung senkrecht zur Achse D beschreibt, ist im Allgemeinen auch nicht exakt bekannt und kann bevorzugt mit der hier beschriebenen Methode ebenfalls bestimmt werden. Um die Beschreibung der Idee hinter der Kalibrierung aus das wesentliche zu beschränken, wird im Folgenden eine Messkugel mit Durchmesser 0 angenommen. In diesem vereinfachten Fall, entspricht der Messkugelmittelpunkt auch gleich dem Berührpunkt zwischen Messkugel und Zahnflanke. In der Praxis muss aus dem Messkugelmittelpunkt unter Berücksichtigung des Messkugeldurchmessers und des Normalenvektors der Zahnflanke am Berührpunkt der Berührpunkt bestimmt werden, wie dies aus der Messtechnik allgemein bekannt ist.

Zur Kalibrierung werden nacheinander die vier Punkte 11 bis 14 aus Figur 5 mit der Messkugel angetastet und die jeweils zum Zeitpunkt der Berührung aus den Messsystemen der Achsen C1 und D ausgelesenen Positionen aufgezeichnet. Diese Positionen werden im Folgenden als $C1_{11}$, $C1_{12}$, $C1_{13}$ und $C1_{14}$ bzw. $D_{11}$, $D_{12}$, $D_{13}$ und $D_{14}$ bezeichnet.

EP 3 456 453 B1

Die vier Punkte können in gewissen Grenzen frei gewählt werden, bevorzugt werden zwei Punkte auf einer linken und zwei Punkte auf einer rechten Flanke angetastet, wobei bevorzugt auf jeder Flanke jeweils ein Punkt in der Nähe des Zahnkopfes und ein weiterer in der Nähe des Zahnfußes angetastet wird. Die Punkte müssen dabei nicht exakt getroffen werden, was auf Grund des nicht exakt bekannten relativen Lage zwischen Messkugelmittelpunkt und Werkzeugspindelachse und des nicht exakt bekannten Versatzes $\Delta V$ auch gar nicht möglich wäre.

Die Punkte können auf verschiedenen Schälradzähnen liegen, es ist jedoch auch möglich, wie in Figur 5 gezeigt, die linke und rechte Flanke desselben Schälradzahns zu wählen. Es wird angenommen, dass das Profil des Schälradzahns mit hoher Genauigkeit bekannt ist. Dies ist bei Schälrädern in der Regel der Fall, da diese hochpräzise geschliffen werden. Die Profile $V_l(\rho_l)$ und $V_r(\rho_r)$ der linken bzw. rechten Flanke können in Polarkoordinaten wie folgt beschrieben werden:

$$V_l(\rho_l) = R_l(\rho_l)\begin{pmatrix}\cos(\rho_l + \psi_l)\\ \sin(\rho_l + \psi_l)\end{pmatrix} \qquad\qquad V_r(\rho_r) = R_r(\rho_r)\begin{pmatrix}\cos(\rho_r + \psi_r)\\ \sin(\rho_r + \psi_r)\end{pmatrix} \qquad (1)$$

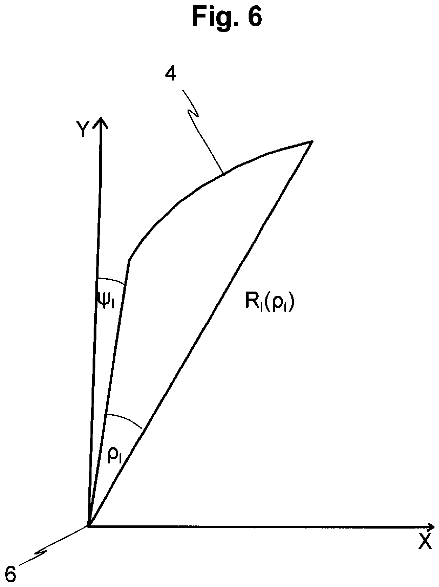

wobei $\rho_l$ bzw. $\rho_r$ der Polarwinkel, $R_l(\rho_l)$ bzw. $R_r(\rho_r)$ der Radius in Abhängigkeit der Polarwinkel und die zunächst unbekannten Winkel $\psi_l$ und $\psi_r$ die Drehposition der Flanken beschreiben. Siehe Figur 6. Aus den vier Antastvorgängen ergeben sich die vier mal zwei Gleichungen:

$$R_l(\rho_{l11})\begin{pmatrix}\cos(\rho_{l11} + \psi_l + C1_{11})\\ \sin(\rho_{l11} + \psi_l + C1_{11})\end{pmatrix} = \begin{pmatrix}\Delta D + D_{11}\\ \Delta V\end{pmatrix} \qquad (2)$$

$$R_l(\rho_{l12})\begin{pmatrix}\cos(\rho_{l12} + \psi_l + C1_{12})\\ \sin(\rho_{l12} + \psi_l + C1_{12})\end{pmatrix} = \begin{pmatrix}\Delta D + D_{12}\\ \Delta V\end{pmatrix} \qquad (3)$$

$$R_r(\rho_{r13})\begin{pmatrix}\cos(\rho_{r13} + \psi_r + C1_{13})\\ \sin(\rho_{r13} + \psi_r + C1_{13})\end{pmatrix} = \begin{pmatrix}\Delta D + D_{13}\\ \Delta V\end{pmatrix} \qquad (4)$$

$$R_r(\rho_{r14})\begin{pmatrix}\cos(\rho_{r14} + \psi_r + C1_{14})\\ \sin(\rho_{r14} + \psi_r + C1_{14})\end{pmatrix} = \begin{pmatrix}\Delta D + D_{14}\\ \Delta V\end{pmatrix} \qquad (5)$$

Wobei $\Delta D$ den im Rahmen der Kalibrierung gesuchten Fehler im Abstand zwischen Messeinheit und Werkzeugspindelachse beschreibt und die vier Winkel $\rho_{l11}$, $\rho_{l12}$, $\rho_{r13}$, $\rho_{r14}$ die Polarwinkel der Punkte auf der linken bzw. rechten Flanke beschreiben, an denen die Messkugel tatsächlich die Flanken berührt hat.

Diese insgesamt acht Gleichungen beschreiben ein Gleichungssystem in den acht Unbekannten $\rho_{l11}$, $\rho_{l12}$, $\rho_{r13}$, $\rho_{r14}$, $\psi_l$, $\psi_r$, $\Delta D$ und $\Delta V$ welches im Allgemeinen nur numerisch gelöst werden kann.

Es ist ebenfalls möglich, mehr als die beiden hier verwendeten Achsen D und C1 zu nutzen, um eine Berührung zwischen Messkugel und Zahnflanke herbeizuführen, sofern weitere Achsen dafür zur Verfügung stehen. In dem Falle, in dem die Messeinheit am Gegenständer angebracht ist, können beispielsweise die Achsen X1 und V1 sowie C1 verwendet werden.

Um die Genauigkeit der Kalibrierung zu erhöhen, ist es möglich, mehr als vier Punkte verteilt über einen oder mehrere Schälradzähne zu messen, insbesondere kann durch die Verwendung eines messenden Tasters oder durch ein optisches Verfahren eine Vielzahl von Punkten aufgenommen werden, insbesondere können diese auch über mehrere oder alle Schälradzähne verteilt liegen. Es ergibt sich dadurch ein Gleichungssystem mit mehr Gleichungen als unbekannten, welches somit überbestimmt ist. Im Rahmen einer Ausgleichsrechnung lassen sich dann weiterhin $\Delta V$ und $\Delta D$ bestimmen. In einer einfachen Variante ist es auch möglich, nur $\Delta V$ oder nur $\Delta D$ zu bestimmen. Dazu werden aus dem Gleichungssystem nur die vier Gleichungen für die linke oder die rechte Flanke ausgewählt, was zu einem Gleichungssystem mit vier Unbekannten führt. Zum Kalibrieren in axialer Richtung der Werkzeugspindelachse kann beispielsweise ein Punkt auf der Werkzeugaufnahme angetastet werden.

**Patentansprüche**

1. Verfahren zum Wälzschälen eines Werkstücks, wobei:

in einem ersten Schritt die Geometrie eines Werkzeugs (21), insbesondere eines Schälrads, zum Bearbeiten des Werkstücks in einem in einer Vorrichtung (20) zur Wälzschälbearbeitung eingespannten Zustand vermessen wird,

in einem nachgelagerten weiteren Schritt eine Bearbeitungskinematik zum Wälzschälen in Abhängigkeit von der vermessenen Geometrie des Werkzeugs (21) bestimmt wird, und

in dem ersten Schritt die absolute Lage einer Schneidkante des Werkzeugs (21) in der Vorrichtung (20) bestimmt wird,

**dadurch gekennzeichnet, dass**

in dem ersten Schritt neben einem Bestimmen der Lage der Schneidkante zusätzlich der räumliche Verlauf der Schneidkante bestimmt wird, wobei

in dem ersten Schritt beim Bestimmen der absoluten Lage der Schneidkante des Werkzeugs sowohl die axiale Lage der Schneide relativ zur Anlagefläche des Werkzeugs an der Werkzeugaufnahme als auch die Drehposition auf der Spindel bestimmt wird.

2. Verfahren nach einem der vorhergehenden Ansprüche, wobei das Werkzeug ein Schälrad ist und eine oder mehrere der folgenden geometrischen Größen am Schälrad gemessen werden:

a) einen Außendurchmesser des Schälrads (21) an einer oder mehreren axialen Positionen des Schälrads (21),
b) eine Zahndicke des Schälrads (21) an einer oder mehreren axialen Positionen des Schälrads (21),
c) eine Profillinie des Schälrads (21),
d) eine Flankenlinie des Schälrads (21),
e) einen Verlauf der Schneidkante des Schälrads (21),
f) eine Lage der Spanfläche und/oder deren Orientierung, insbesondere Span- und Treppenwinkel, und/oder
g) die Lage des Werkzeugs, vorzugsweise eine Drehposition des Schälrads (21), bevorzugterweise die Drehposition einer oder mehrere Zähne auf dem Schälrad (21).

3. Verfahren nach einem der vorhergehenden Ansprüche, wobei die Bearbeitungskinematik in Abhängigkeit von der gemessenen Geometrie des Werkzeuges und von einer Axialvorschubposition des Werkstücks bestimmt und/oder korrigiert wird.

4. Verfahren nach einem der vorgehenden Ansprüche 1 bis 2, wobei die Bearbeitungskinematik in Abhängigkeit von der gemessenen Geometrie des Werkzeuges bestimmt und/oder korrigiert wird und während eines Bearbeitungshubes konstant bleibt.

5. Verfahren nach einem der vorhergehenden Ansprüche, wobei durch die Bearbeitungskinematik eine Abweichung in der Zahndicke, im Profilwinkel und/oder im Fußkreisradius kompensiert wird und/oder eine Winkellage der geschälten Lücke in dem Werkstück gezielt vorgegeben wird.

6. Verfahren nach einem der vorhergehenden Ansprüche, wobei mindestens eine der Größen der Bearbeitungskinematik, insbesondere eine Koppelposition, ein Achsabstand, ein Achskreuzwinkel und ein Spanflächenversatz bestimmt wird.

7. Verfahren nach einem der vorhergehenden Ansprüche, wobei mittels einer Überprüfung beurteilt wird, ob mit dem Schälrad und einer Bearbeitungskinematik eine vorgegebene Fertigungstoleranz eingehalten werden kann und/oder technologische Größen innerhalb eines vorgegebenen Bereichs liegen, wobei abhängig vom Ergebnis der Überprüfung von der Maschine entsprechende Arbeitsabläufe ausgegeben werden.

8. Vorrichtung (20) zum Durchführen des Verfahrens nach einem der vorhergehenden Ansprüche, umfassend:

ein Werkzeug (21) zum Bearbeiten eines Werkstücks, insbesondere ein Schälrad,
eine Werkzeugaufnahme (22) zum Aufnehmen des Werkzeugs (21),
eine Messeinheit (23), die dazu ausgelegt ist, die Geometrie des in der Werkzeugaufnahme (22) aufgenommenen Werkzeugs (21) zu vermessen,
eine Steuereinheit, die dazu ausgelegt ist, eine Bearbeitungskinematik zum Wälzschälen in Abhängigkeit von der vermessenen Geometrie des Werkzeugs (21) zu bestimmen, wobei
die Messeinheit (23) ferner dazu ausgelegt ist, eine absolute Lage einer Schneidkante des Werkzeugs (21) in der Vorrichtung (20) zu bestimmen, so dass die Bearbeitungskinematik auch auf Grundlage der absoluten Lage bestimmt wird,

**dadurch gekennzeichnet, dass**

die Messeinheit (23) ferner dazu ausgelegt ist, neben einem Bestimmen der Lage der Schneidkante zusätzlich den räumlichen Verlauf der Schneidkante und beim Bestimmen der absoluten Lage der Schneidkante des Werkzeugs sowohl die axiale Lage der Schneide relativ zur Anlagefläche des Werkzeugs an der Werkzeugaufnahme als auch die Drehposition auf der Spindel zu bestimmen.

9. Vorrichtung (20) nach Anspruch 8, wobei die Vorrichtung (20) dazu ausgelegt ist, die räumliche Lage der Messeinheit (23) in Bezug auf die Spindelachse des Schälrads (21) zu kalibrieren, indem ein in seinem Durchmesser bekannter Prüfbund, oder einen Kegel eines Spannfutters der auf einer Spindelachse des Schälrads (21), an der Werkzeugaufnahme (22) und/oder am Schälrad (21) angeordnet ist, mit der Messeinheit (23) vermessen wird, so dass der Abstand zwischen Messeinheit (23) und Spindelachse bestimmbar ist, um die Messeinheit (23) entsprechend zu kalibrieren.

10. Vorrichtung (20) nach Anspruch 8 oder 9, wobei die Vorrichtung (20) dazu ausgelegt ist, bei bekanntem Zahnprofil, insbesondere einem Profilwinkel, des Schälrads (21), das Zahnprofil des in der Werkzeugaufnahme (22) befindlichen Schälrads (21) mittels der Messeinheit (23) zu bestimmen und mit dem bekannten Zahnprofil zu vergleichen, um aus einer Abweichung zwischen dem bekannten Zahnprofil zu dem gemessenen Zahnprofil den Fehler in der relativen Lage zwischen Messeinheit (23) und Schälrad (21) zu bestimmen.

11. Vorrichtung (20) nach Anspruch 8 bis 10, wobei die Steuereinheit ferner dazu ausgelegt ist, eine Fertigungssimulation eines Wälzschälens auf Grundlage einer von der Messeinheit (23) vorgenommenen Vermessung des in der Werkzeugaufnahme (22) befindlichen Werkzeugs (21) auszuführen und anhand dieser die Bearbeitungskinematik für einen Wälzschälvorgang mit dem vermessenen Werkzeug (21) zu erzeugen.

12. Vorrichtung (20) nach einem der vorhergehenden Ansprüche 8 bis 11, wobei bei einem bekannten Soll-Zahnprofil des Werkzeugs (21), insbesondere einem Profilwinkel eines Schälrads, das tatsächliche Zahnprofil des in der Werkzeugaufnahme (22) befindlichen Werkzeugs (21) bestimmt wird und mit dem Soll-Zahnprofil verglichen wird, um aus einer Abweichung zwischen dem Soll-Zahnprofil zu dem gemessenen tatsächlichen Zahnprofil einen Fehler in der relativen Lage zwischen Messeinheit (23) und Werkzeug (21) zu bestimmen.

**Claims**

1. A method for gear skiving a workpiece, wherein:

   in a first step, the geometry of a tool (21), in particular of a skiving wheel, is measured for the machining of the workpiece in a state clamped in an apparatus (20) for gear skiving machining;
   in a subsequent further step, machining kinematics are determined for the gear skiving in dependence on the measured geometry of the tool (21); and
   the absolute location of a cutting edge of the tool (21) in the apparatus (20) is determined in the first step,
   **characterized in that**
   the spatial extent of the cutting edge is additionally determined beside a determination of the location of the cutting edge in the first step, with
   both the axial location of the blade relative to the contact surface of the tool at the tool mount and the rotational position on the spindle being determined in the first step on the determination of the absolute location of the cutting edge of the tool.

2. A method in accordance with one of the preceding claims, wherein the tool is a skiving wheel and one or more of the following geometrical parameters are measured at the skiving wheel:

   a) an outside diameter of the skiving wheel (21) at one or more axial positions of the skiving wheel (21);
   b) a tooth thickness of the skiving wheel (21) at one or more axial positions of the skiving wheel (21);
   c) a profile line of the skiving wheel (21);
   d) a tooth trace of the skiving wheel (21);
   e) an extent of the cutting edge of the skiving wheel (21);
   f) a location of the rake face and/or its orientation, in particular its rake angle and step angle; and/or
   g) the location of the tool, preferably a rotational position of the skiving wheel (21), preferably the rotational position of one or more teeth on the skiving wheel (21).

3. A method in accordance with one of the preceding claims, wherein the machining kinematics are determined and/or corrected in dependence on the measured geometry of the tool and on an axial feed position of the workpiece.

4. A method in accordance with one of the preceding claims 1 to 2, wherein the machining kinematics are determined and/or corrected in dependence on the measured geometry of the tool and remain constant during a machining stroke.

5. A method in accordance with one of the preceding claims, wherein a deviation in the tooth thickness, in the profile angle and/or in the root radius is compensated by the machining kinematics and/or an angular location of the skived gap in the workpiece is directly predefined.

6. A method in accordance with one of the preceding claims, wherein at least one of the parameters of the machining kinematics, in particular a coupling position, a center distance, an axial cross angle, and a rake face offset, is determined.

7. A method in accordance with one of the preceding claims, wherein an evaluation is made by means of a check whether a predefined production tolerance can be observed with the skiving wheel and machining kinematics and/or whether technological parameters are within a predefined range, with corresponding workflows being output by the machine in dependence on the result of the check.

8. An apparatus (20) for carrying out the method in accordance with one of the preceding claims comprising:

a tool (21) for machining a workpiece, in particular a skiving wheel;
a tool mount (22) for receiving the tool (21);
a measurement unit (23) that is configured to measure the geometry of the tool (21) received in the tool mount (22); and
a control unit that is configured to determine machining kinematics for gear skiving in dependence on the measured geometry of the tool (21), wherein
the measurement unit (23) is further configured to determine an absolute location of a cutting edge of the tool (21) in the apparatus (20) so that the machining kinematics are also determined on the basis of the absolute location,
**characterized in that**
the measurement unit (23) is further configured to additionally determine the spatial extent of the cutting edge and to determine both the axial location of the blade relative to the contact surface of the tool at the tool mount and the rotational position on the spindle on the determining of the absolute location of the cutting edge of the tool in addition to a determination of the location of the cutting edge.

9. An apparatus (20) in accordance with claim 8, wherein the apparatus (20) is configured to calibrate the spatial location of the measurement unit (23) with respect to the spindle axis of the skiving wheel (21) in that an inspection collar whose diameter is known or a cone of a chuck that is arranged on a spindle axis of the skiving wheel (21), at the tool mount (22) and/or at the skiving wheel (21) is measured by the measurement unit (23) such that the distance between the measurement unit (23) and the spindle axis can be determined to calibrate the measurement unit (23) accordingly.

10. An apparatus (20) in accordance with claim 8 or claim 9, wherein the apparatus (20) is configured to determine the tooth profile of the skiving wheel (21) located in the tool mount (22) by means of the measurement unit (23) with a known tooth profile, in particular a profile angle, of the skiving wheel (21) and to compare it with the known tooth profile to determine the error in the relative location between the measurement unit (23) and the skiving wheel (21) from a deviation between the known tooth profile and the measured tooth profile.

11. An apparatus (20) in accordance with claims 8 to 10, wherein the control unit is further configured to carry out a production simulation of a gear skiving on the basis of a measurement of the tool (21) located in the tool mount (22) made by the measurement unit (23) and to generate the machining kinematics for a gear skiving process with the measured tool (21) with reference thereto.

12. An apparatus (20) in accordance with one of the preceding claims 8 to 11, wherein with a known desired tooth profile of the tool (21), in particular a profile angle of a skiving wheel, the actual tooth profile of the tool (21) located in the tool mount (22) is determined and is compared with the desired tooth profile to determine an error in the relative location between the measurement unit (23) and the tool (21) from a deviation between the desired toot profile and the measured actual tooth profile.

**Revendications**

1. Procédé de taillage par développante d'une pièce, dans lequel :

   dans une première étape, la géométrie d'un outil (21), en particulier un pignon de taillage, destiné à l'usinage de la pièce est mesuré dans un état serré dans un dispositif (20) d'usinage par taillage par développante,
   dans une autre étape subséquente, une cinématique d'usinage pour le taillage par développante est déterminée en fonction de la géométrie mesurée de l'outil (21), et
   dans la première étape, la position absolue d'une arête de coupe de l'outil (21) dans le dispositif (20) est déterminée,
   **caractérisé en ce que**
   dans la première étape, le tracé dans l'espace de l'arête de coupe est déterminé en plus d'une détermination de la position de l'arête de coupe, dans lequel
   dans la première étape, lors de la détermination de la position absolue de l'arête de coupe de l'outil, aussi bien la position axiale du taillant par rapport à la surface d'appui de l'outil sur le logement d'outil que la position en rotation sur la broche sont déterminées.

2. Procédé selon l'une des revendications précédentes, dans lequel l'outil est un pignon de taillage et une ou plusieurs des grandeurs géométriques suivantes sont mesurées sur le pignon de taillage :

   a) un diamètre extérieur du pignon de taillage (21) dans une ou plusieurs positions axiales du pignon de taillage (21),
   b) une épaisseur de dent du pignon de taillage (21) dans une ou plusieurs positions axiales du pignon de taillage (21),
   c) une ligne de profil du pignon de taillage (21),
   d) une ligne de flanc du pignon de taillage (21),
   e) un tracé de l'arête de coupe du pignon de taillage (21),
   f) une position de la face de coupe et/ou son orientation, en particulier l'angle de coupe et de gradin, et/ou
   g) la position de l'outil, de préférence une position en rotation du pignon de taillage (21), plus préférentiellement la position en rotation d'une ou de plusieurs dents sur le pignon de taillage (21).

3. Procédé selon l'une des revendications précédentes, dans lequel la cinématique d'usinage est déterminée et/ou corrigée en fonction de la géométrie mesurée de l'outil et d'une position d'avance axiale de la pièce.

4. Procédé selon l'une des revendications précédentes 1 à 2, dans lequel la cinématique d'usinage est déterminée et/ou corrigée en fonction de la géométrie mesurée de l'outil et reste constante pendant une course d'usinage.

5. Procédé selon l'une des revendications précédentes, dans lequel un écart dans l'épaisseur de dent, l'angle de profil et/ou le rayon de pied de dent est compensé par la cinématique d'usinage et/ou une position angulaire de l'intervalle taillé dans la pièce est prédéfinie de manière ciblée.

6. Procédé selon l'une des revendications précédentes, dans lequel au moins une des grandeurs de la cinématique d'usinage, en particulier une position de couplage, un entraxe, un angle de croisement des axes et un décalage de face de coupe est déterminée.

7. Procédé selon l'une des revendications précédentes, dans lequel une vérification permet de juger si une tolérance de fabrication prédéfinie peut être respectée avec le pignon de taillage et une cinématique d'usinage et/ou si des grandeurs technologiques sont comprises dans une plage prédéfinie, des cycles d'opération correspondants étant fournis en sortie par la machine en fonction du résultat de la vérification.

8. Dispositif (20) destiné à exécuter le procédé selon l'une des revendications précédentes, comprenant :

   un outil (21) destiné à usiner une pièce, en particulier un pignon de taillage,
   un logement d'outil (22) destiné à recevoir l'outil (21),
   une unité de mesure (23), qui est conçue pour mesurer la géométrie de l'outil (21) reçu dans le logement d'outil (22),
   une unité de commande, qui est conçue pour déterminer une cinématique d'usinage pour le taillage par développante en fonction de la géométrie mesurée de l'outil (21), dans lequel

l'unité de mesure (23) est en coutre conçue pour déterminer une position absolue d'une arête de coupe de l'outil (21) dans le dispositif (20), de telle sorte que la cinématique d'usinage est également déterminée sur la base de la position absolue,

**caractérisé en ce que**

l'unité de mesure (23) est en outre conçue pour déterminer le tracé dans l'espace de l'arête de coupe en plus d'une détermination de la position de l'arête de coupe, et lors de la détermination de la position absolue de l'arête de coupe de l'outil, déterminer aussi bien la position axiale du taillant par rapport à la surface d'appui de l'outil sur le logement d'outil que la position en rotation sur la broche.

9. Dispositif (20) selon la revendication 8, dans lequel le dispositif (20) est conçu pour étalonner la position dans l'espace de l'unité de mesure (23) en référence à l'axe de broche du pignon de taillage (21), en mesurant un collet de contrôle dont le diamètre est connu ou un cône d'un mandrin de serrage qui est agencé sur un axe de broche du pignon de taillage (21), sur le logement d'outil (22) et/ou sur le pignon de taillage (21), avec l'unité de mesure (23), de telle sorte que la distance entre l'unité de mesure (23) et l'axe de broche peut être déterminé pour étalonner l'unité de mesure (23) en conséquence.

10. Dispositif (20) selon la revendication 8 ou 9, dans lequel le dispositif (20) est conçu pour, lorsque le profil de dent, en particulier un angle de profil, du pignon de taillage (21) est connu, déterminer le profil de dent du pignon de taillage (21) se trouvant dans le logement d'outil (22) au moyen de l'unité de mesure (23) et le comparer au profil de dent connu pour déterminer, à partir d'un écart entre le profil de dent connu et le profil de dent mesuré, l'erreur dans la position relative entre l'unité de mesure (23) et le pignon de taillage (21).

11. Dispositif (20) selon la revendication 8 à 10, dans lequel l'unité de commande est en outre conçue pour exécuter une simulation de fabrication par taillage par développante sur la base d'une mesure effectuée par l'unité de mesure (23) de l'outil (21) se trouvant dans le logement d'outil (22) et générer à partir de celle-ci la cinématique d'usinage pour un processus de taillage par développante avec l'outil (21) mesuré.

12. Dispositif (20) selon l'une des revendications précédentes 8 à 11, dans lequel, lorsqu'un profil de dent de consigne de l'outil (21), en particulier un angle de profil d'un pignon de taillage, est connu, le profil de dent réel de l'outil (21) se trouvant dans le logement d'outil (22) est déterminé et comparé au profil de dent de consigne pour, à partir d'un écart entre le profil de dent de consigne et le profil de dent réel mesuré, déterminer une erreur dans la position relative entre l'unité de mesure (23) et l'outil (21).

# Fig. 1

# Fig. 2

# Fig. 3

233

232

231

21

# Fig. 4

# Fig. 5

# Fig. 6

**EP 3 456 453 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015104310 A1